# EUROPEAN PATENT APPLICATION

(11) **EP 1 243 963 A2**
(43) Date of publication of application: **25.09.2002**
(21) Application number: 02405222.7
(22) Date of filing: 22.03.2002
(51) Int. Cl.: G02F 1/01, G02F 1/025

(54) **Variable optical attenuator using waveguide modification**

(30) Priority: 23.03.2001 US 277977 P
(71) Applicant: MetroPhotonics Inc., Ottawa, Ontario K7C 7J2 (CA)
(72) Inventor: He, Jian-Jun, Ottawa, Ontario K1K 4R8 (CA)
(74) Representative: Frei, Alexandra Sarah

(57) **Abstract**

A variable optical attenuator is disclosed having a waveguide modification. Light coupling from an input waveguide to an output waveguide is electrically controllable through an electrically variable refractive index region, wherein attenuation of the device is dependent upon the applied voltage to the electrically variable refractive index region.

## Description

### Field of the Invention

The invention relates to the field of fibre optic network devices and more specifically to electrically controlled variable optical attenuators for use in fibre optic network optical power management.

### Background of the Invention

Many forms of light controlling devices are available which variably attenuate an optical signal in dependence upon an electrical control signal. There are many different embodiments of variable optical attenuators (VOAs) in the prior art. Typically, prior art VOAs are electrically controllable; methods of attenuation vary. Many VOAs are mechanical based, wherein a motor is used to translate a beam block through a free space optical path. Others use deflection techniques whereby an optical beam is mechanically deflected past an output port. Yet other designs utilise interference effects and some polarization rotation. Optical attenuation is a key area in fiber optics communications networks where networks need to have variable power levels therein in order to support the higher bit rates. Ideally an attenuator is fast and inexpensive. In order to manufacture reliable VOAs that are inexpensive, integrated optical devices appear preferable.

Integrated planar waveguide optical attenuators are very attractive due to their small size, possible array configuration, manufacturing scalability and potential for monolithic integration with other waveguide devices. Their implementation in semiconductor materials such as InGaAsP/InP allows monolithic integration with active semiconductor devices.

It is therefore an object of this invention to provide a low cost optical attenuation device that is easily integrated into other waveguide based devices, offers capacity for high attenuation, and has a fast response.

### Summary of the Invention

In accordance with the invention there is provided a variable optical attenuator, comprising: a waveguide substrate; first and second optical channel waveguides disposed on the substrate for guiding light propagating therein; and a variable refractive index region in a first mode of operation for guiding light propagating therein and in a second other mode of operation for supporting unguided propagation of light therein and disposed between the first and the second optical channel waveguides for guiding light from one to the other in the first mode of operation.

The invention also teaches a method of variably attenuating an optical signal comprising the steps of: providing an optical guiding path between an input port and an output port; electrically effecting a portion of the optical guiding path to produce a less guiding portion of the optical guiding path wherein light propagating within the less guided portion is attenuated.

Additionally, the invention teaches a variable optical attenuator, comprising: a waveguide substrate; a plurality of first optical guiding regions disposed on the substrate for guiding light propagating therein; a plurality of second optical guiding regions disposed on the substrate for guiding light propagating therein; and a plurality of variable refractive index regions, each responsive to an electric field for modifying an index of refraction therein in dependence upon an applied electrical potential and selectably operable between a first mode of operation for guiding light propagating therein and a second other mode of operation for supporting propagation of light therein less guided than light propagating therein in the first mode of operation and disposed between the first and the second optical guiding regions for guiding light from one to the other in the first mode of operation; and, at least an electrode for providing the electric field, such that each of the plurality of first optical guiding regions is associated with one of the plurality of second optical guiding regions and one of the plurality of variable refractive index regions.

### Brief Description of the Drawings

The invention will now be described in conjunction with the attached drawings in which:
Figure 1 is a diagram of a curved optical channel waveguide disposed on a substrate;
Figure 2 is a diagram of two joined optical waveguides with an electrically variable refractive index region disposed therebetween;
Figure 3 is a diagram of a metal electrode as part of the electrically variable refractive index region on top of the wave guiding region;
Figures 4a and 4b are diagrams of the index profiles within the electrically variable refractive index region in response to two different applied voltages;
Figure 5 is a diagram of an optical attenuator in accordance with the present invention;
Figure 6 is a diagram of coupling loss between the input waveguide and the output waveguide in response to the applied voltage to the electrically variable refractive index region;
Figure 7 is a section view of the alternate embodiment where an index step is created within the electrically variable refractive index region in dependence upon applied voltage;
Figure 8 is a section view of the alternate embodiment where an index step is created within the electrically variable refractive index region in dependence upon applied voltage in order to reduce the quality of guiding of the guiding region;
Figure 9 is a top view diagram of an embodiment of the invention with the output waveguide perpendicular to the input waveguide; and,
Figure 10 is a top view diagram of an embodiment of the invention with an array of variable attenuators having parallel waveguides.

### Detailed Description of the Invention

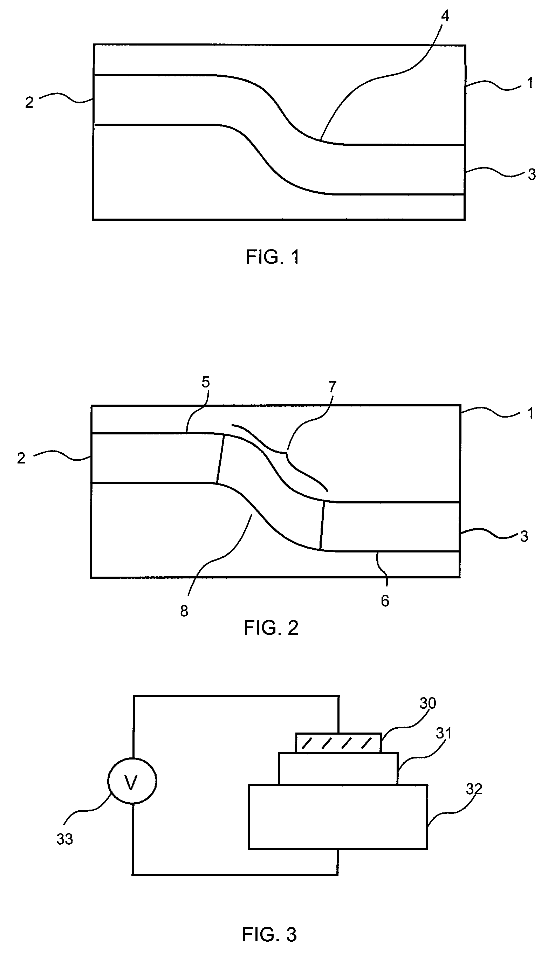

In Figure 1, a semiconductor waveguide 4 on a substrate 1 is shown, having an input port 2 for receiving light, an output port 3, and a continuous guiding region therebetween.

Figure 2 illustrates an input waveguide 5 and an output waveguide 6, formed on a waveguide slab 1. The output waveguide is a continuation of a smooth sinuous curve of the input waveguide wherein an electrically variable refractive index region 7 is disposed therebetween. A metal contact pattern 8 is deposited on guiding portion of the waveguide creating an electrically variable refractive index region 7 between the input and output waveguides.

With an optical input signal 2 on the input waveguide 5, and no potential applied to the electrodes on the electrically variable refractive index region 7 with no change in refractive index of the actual waveguide within this region, the optical input signal 2 is guided through the continuous waveguide - from input waveguide to output waveguide. If a potential is applied to the electrode 8 on the electrically variable refractive index region 7 thereby changing the refractive index, only a portion of the signal propagates into the output waveguide. The portion is dependent upon the index variation caused within the electrically variable refractive index region 7. This, in turn, depends upon the applied voltage. Clearly, as the region becomes less guiding, light propagating therein experiences more substantial losses.

The metal contact pattern 8 is illustrated more clearly in Figure 3, wherein the metal electrode 30 is disposed on the optical guiding region 31 which is disposed on the substrate. An electrical potential 33 is applied between the electrode and another electrode to cause an electrically variable refractive index variation within the electrically variable refractive index region 7.

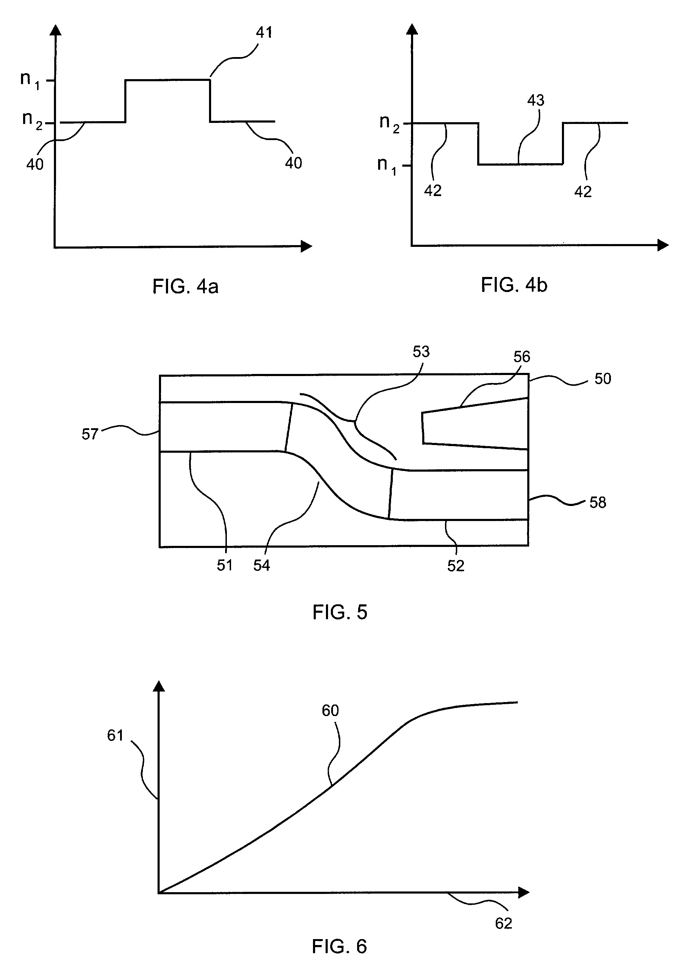

Figures 4a and 4b illustrate the index profile within the electrically variable refractive index region 7. For an optical mode to propagate in a confined manner through a waveguide the index of the guiding region must be higher than that of the surrounding cladding regions.

As is shown in Figure 4a, with no voltage applied to the electrodes proximate the electrically variable refractive index region 7, the guiding region 41 within the electrically variable refractive index region 7 has an index of n1 which is higher than the index n2 of the cladding 40, and as a result the optical mode is confined within this region and propagates from the input waveguide 5 to the output waveguide 6 through the electrically variable refractive index region 7 in a guided fashion.

As can be seen in Figure 4b, with a voltage applied to the electrically variable refractive index region the guiding region within the electrically variable refractive index region 43 has an index of n1 which is equal to or lower than the index of the cladding 42, n2, and as a result the optical mode is not confined within this region and as a result a coupling loss between the input and output waveguides results in response to the index variation in the electrically variable refractive index region in dependence upon the magnitude of the applied voltage. Of course, merely reducing guiding provided within the waveguide results in some attenuation. Thus, reducing the refractive index of the guiding region n1 so that it is higher than the index of the cladding n2 but reduced relative to the index of refraction with no applied voltage reduces the waveguiding properties of the guiding region. This poorer guiding provides some amount of attenuation. Therefore, attenuation is possible over a range of that provided with no voltage to that provided when no guiding is provided within the waveguide.

In accordance with known variable optical attenuators, a feedback circuit is used to provide analogue control of the electric signal provided to the waveguide to support stable and variable optical attenuation. This will be apparent to those of skill in the art of variable optical attenuator design.

Figure 5 illustrates an optical attenuator in accordance with the present invention.
The output waveguide 52 is a smooth sinuous continuation of the input waveguide 51 wherein an electrically variable refractive index region 53 is disposed therebetween. A metal contact pattern 54 is deposited on a guiding portion of the waveguide within the electrically variable refractive index region 53 between the input and output waveguides.

With an optical input signal 57 on the input waveguide 51 and no potential applied to the electrodes on the electrically variable refractive index region 53 resulting in no change in refractive index of the actual waveguide within this region, the optical input signal is guided with minimal propagation loss from the input waveguide 51 to the output waveguide 52.

If a potential is applied to the electrode 54 on the electrically variable refractive index region 53 thereby changing the refractive index within the region 53, only a portion of the optical input signal 57 propagates to the output waveguide 52. The portion depends on the amount of guiding within region 53 and therefore is dependent upon the index variation caused within the electrically variable refractive index region 53. Typically, this depends upon the applied voltage. Attenuation of the input optical signal is obtained through variation of the applied voltage.

If a threshold voltage is applied across the electrically variable refractive index region 53 then the index step within the guiding region becomes sufficiently low such that, as a result, a majority of the optical signal 56 propagates within the slab region 50. This results in no power or a minimal amount of power coupling to the output waveguide.

In a preferred embodiment, the waveguide is formed of a semiconductor material such as InP and the applied potential is a forward bias sufficient to induce the desired changes in the waveguide refractive index. Carriers are injected resulting in a decrease in the refractive index in the region beneath the metal contact. When the injected current exceeds a predetermined level, the lateral confinement of the waveguide beneath the metal contact - the electrode -disappears. With injected current below that predetermined level, lateral confinement of the waveguide beneath the metal contact is reduced allowing for variability of the optical attenuation. In addition to the variation in the lateral confinement, the waveguide carrier induced absorption in the region below the forward biased electrode further increases the attenuation and improves the extinction ratio of the device.

In the preferred embodiment, the electrically controlled variable refractive index region is formed on a segment of curved waveguide. For a given refractive index variation, the curved waveguide gives a much higher attenuation compared to a straight waveguide. The smaller the radius of curvature, the higher the attenuation. Of course, the radius of curvature is designed to be large enough so that the loss at the minimum attenuation state is acceptable.

Figure 6 illustrates the coupling loss between the input waveguide and the output waveguide in dependence upon the applied voltage to the electrically variable refractive index region. As the applied voltage 62 to the electrically variable refractive index region is increased the coupling loss 61 between the input waveguide and the output waveguide increases.

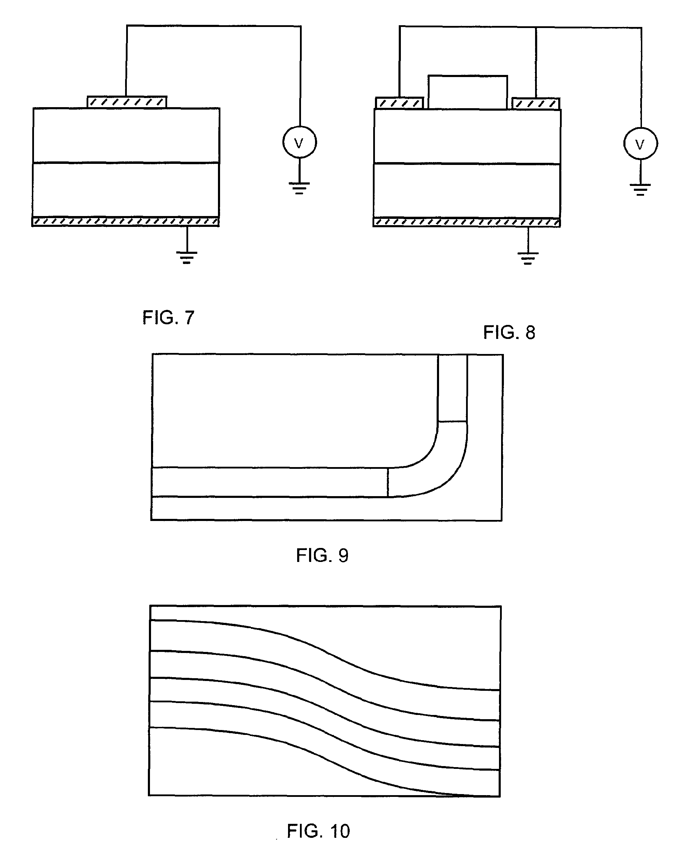

Alternatively, as shown in Figures 7 and 8, the guiding region within the electrically variable refractive index region between the input waveguide and the output waveguides is formed in response to an applied reverse-bias voltage across the region. In Figure 7, no guiding exists in the variable refractive index region when no voltage is applied. An applied voltage (e.g. a reverse bias) is used to raise the index of refraction of the waveguide material to form a guiding region thereunder. In the diagram of Fig. 8, the electrodes are positioned on opposing sides of the desired guiding region. By applying a reverse bias to each electrode, the region thereunder is affected to have an increase index of refraction and therefore, the region therebetween reduces the coupling of light propagating between the input waveguide and the output waveguide.

Numerous other configurations of the invention are easily envisioned by one of skill in the art. For example, referring to Fig. 9, a variable attenuator according to the invention is shown in which the input waveguide is perpendicular to the output waveguide. This allows significantly different styles of packages to be used.

In another embodiment of the invention shown in Fig. 10, a set of attenuators is provided on a same waveguide substrate. This is very beneficial to the cost of the finished array of attenuators because the substrate used in this device is not substantially more expensive to produce than the substrates used in a single attenuator device.

The geometries of the input and output waveguides, the length of the electrically variable refractive index region, and the placement of the three determine many of the parameters of an attenuator according to the invention. For example, when the input and output waveguides are co-linear and spaced apart by only a small gap, the attenuation possible with such a device is small since even when unguided over a very short distance, the light within the waveguides has insufficient distance to disperse. Alternatively, when the electrically variable refractive index region forms a curve within the guided path for the optical signal, rendering the electrically variable refractive index region non-guiding results in light propagating approximately straight from the input waveguide thereby missing the output waveguide and resulting in substantial attenuation. Though the term beneath is used to refer to a region of a substrate or of waveguide material adjacent an electrode, it will be apparent to those of skill in the art that the waveguide is disposable in any of a number of orientations such that the region with injected carriers therein is to the side of the electrode, etc.

Numerous other embodiments may be envisioned without departing from the spirit or scope of the invention.

## Claims

1. A variable optical attenuator, comprising:
a waveguide substrate;
first and second optical guiding regions disposed on the substrate for guiding light propagating therein; and
a variable refractive index region responsive to an electric field for modifying an index of refraction therein in dependence upon an applied electrical potential and selectably operable between a first mode of operation for guiding light propagating therein and a second other mode of operation for supporting propagation of light therein less guided than light propagating therein in the first mode of operation and disposed between the first and the second optical guiding regions for guiding light from one to the other in the first mode of operation; and,
at least an electrode for providing the electric field.

2. A variable optical attenuator according to claim 1, wherein the magnitude of the applied electrical potential is related to the coupling loss between the first and second optical guiding regions.

3. A variable optical attenuator according to claim 2, wherein in the second mode of operation the light is substantially unguided.

4. A variable optical attenuator according to claim 1 wherein an electrical current is injected into the variable refractive index region for controlling the attenuation of light propagating between said first and second optical guiding regions within a predetermined range.

5. A variable optical attenuator according to claim 6, wherein the first and
second optical guiding regions are channel waveguides disposed parallel to one another and are offset from one another along an axis parallel to the channel waveguides and
are offset from one another along an axis perpendicular to the channel waveguides.

6. A variable optical attenuator according to claim 1 wherein the variable refractive index region comprises a first electrode and a second electrode for receiving an electrical potential, the first and second electrodes on opposing sides of a third guiding region, the third guiding region optically coupled between the first and second guiding regions wherein when a voltage potential is applied across the first and second electrodes the guiding region becomes less guiding.

7. A variable optical attenuator according to claim 6 wherein the guiding region becomes substantially non-guiding in the presence of an applied voltage.

8. A variable optical attenuator according to claim 1 wherein the variable refractive index region comprises a first electrode and a second electrode for receiving an electrical potential, the first and second electrodes on opposing sides of an unguided region, the unguided region optically coupled between the first and second guiding regions wherein when a voltage potential is applied across the first and second electrodes the unguided region becomes guiding.

9. A variable optical attenuator according to claim 8 wherein the unguided region becomes substantially a guiding region coupling the first and second guiding regions in the presence of an applied voltage.

10. A variable optical attenuator according to claim 1 wherein, in use, light propagating within the first guiding region is attenuated through optical losses occurring as the light propagates through the variable refractive index region to the second guiding region.

11. A variable optical attenuator according to claim 1 wherein the variable refractive index region comprises a first electrode and a second electrode for receiving an electrical potential, the first and second electrodes on opposing sides of a third guiding region, the third guiding region optically disposed between and proximate the first and second guiding regions wherein, in use, the guiding region substantially prevents the coupling of light from the first and second guiding regions and when a predetermined voltage potential is applied across the first and second electrodes the guiding region provides substantial optical coupling between the first and second guiding regions.

12. A variable optical attenuator according to claims 5, 6 and 11, wherein the first and second optical guiding regions are other than channel waveguides disposed co-linearly.

13. A variable optical attenuator according to claim 12, wherein the first and
second optical guiding regions are channel waveguides disposed parallel to one another and are offset from one another along an axis parallel to the channel waveguides and
are offset from one another along an axis perpendicular to the channel waveguides.

14. A variable optical attenuator according to claim 12, wherein the variable refractive index region is substantially curved.

15. A variable optical attenuator according to claim 14, wherein the first and second optical guiding regions and the variable refractive index region are formed on InP.

16. A variable optical attenuator according to claim 11 wherein the guiding region provides optical coupling with negligible attenuation between the first and second guiding regions in the presence of a predetermined applied voltage.

17. A variable optical attenuator according to claims 12, wherein the first and second optical guiding regions are channel waveguides disposed substantially perpendicular to each other.

18. A method of variably attenuating an optical signal comprising the steps of:
providing an optical guiding path between an input port and an output port;
electrically effecting a portion of the optical guiding path to produce a less guiding portion of the optical guiding path wherein light propagating within the less guided portion is attenuated.

19. A variable optical attenuator according to claim 1, comprising:
third and fourth optical guiding regions disposed on the substrate for guiding light propagating therein; and
a second variable refractive index region responsive to an electric field for modifying an index of refraction therein in dependence upon an applied electrical potential and selectably operable between a first mode of operation for guiding light propagating therein and a second other mode of operation for supporting propagation of light therein less guided than light propagating therein in the first mode of operation and disposed between the third and the fourth optical guiding regions for guiding light from one to the other in the first mode of operation.

20. A variable optical attenuator of claim 19 wherein the first and second variable refractive index regions are substantially curved.

21. A variable optical attenuator of claim 19 comprising a second electrode for providing an electric field across the second variable refractive index region.

22. A variable optical attenuator according to claim 19 wherein the plurality of first guiding regions are formed on InP and the plurality of second guiding regions are formed on InP.

23. A variable optical attenuator according to claim 19 comprising a variable guiding region optically coupled between the first guiding region and the second guiding region and another variable guiding region optically coupled between the third guiding region and the fourth guiding region;
wherein each of the variable refractive index regions comprises a first electrode and a second electrode for receiving an electrical potential, each of the first and second electrodes on opposing sides of one of a plurality of the variable guiding regions such that when a voltage potential is applied across any set of the first and second electrodes the corresponding variable guiding region becomes less guiding.

24. A variable optical attenuator according to claim 23 wherein each of the variable refractive index regions is substantially curved.

25. A variable optical attenuator according to claim 19 comprising a variable guiding region optically coupled between the first guiding region and the second guiding region and another variable guiding region optically coupled between the third guiding region and the fourth guiding region;
wherein each of the variable refractive index regions comprises a first electrode and a second electrode for receiving an electrical potential, each of the first and second electrodes on opposing sides of one of a plurality of the variable guiding regions such that when a voltage potential is applied across any set of the first and second electrodes the corresponding variable guiding region becomes more guiding.

26. A variable optical attenuator, comprising:
a waveguide substrate;
a plurality of first optical guiding regions disposed on the substrate for guiding light propagating therein;
a plurality of second optical guiding regions disposed on the substrate for guiding light propagating therein; and
a plurality of variable refractive index regions, each responsive to an electric field for having an index of refraction modified therein in dependence upon an applied electrical potential and selectably operable between a first mode of operation for guiding light propagating therein and a second other mode of operation for supporting propagation of light therein less guided than light propagating therein in the first mode of operation and disposed between the first and the second optical guiding regions for guiding light from one to the other in the first mode of operation; and,
at least an electrode for providing the electric field,
such that each of the plurality of first optical guiding regions is associated with one of the plurality of second optical guiding regions and one of the plurality of variable refractive index regions.

27. A variable optical attenuator according to claim 26 wherein the plurality of first guiding regions are formed on InP and the plurality of second guiding regions are formed on InP.

28. A variable optical attenuator according to claim 26 wherein each of the plurality of variable refractive index regions comprises a first electrode and a second electrode for receiving an electrical potential, each of the first and second electrodes on opposing sides of one of a plurality of a third guiding regions, each of the third guiding regions optically coupled between one of the plurality of first guiding regions and one of the plurality of second guiding regions wherein when a voltage potential is applied across any set of the first and second electrodes the corresponding guiding region becomes less guiding.

29. A variable optical attenuator according to claim 26 wherein the plurality of variable refractive index regions comprises a first electrode and a second electrode for receiving an electrical potential, the first and second electrodes on opposing sides of one of a plurality of a third guiding regions, each of the third guiding regions optically coupled between one of the plurality of first guiding regions and one of the plurality of second guiding regions wherein when a voltage potential is applied across the first and second electrodes at least two of the plurality of guiding regions becomes more guiding.

30. A variable optical attenuator according to claim 26 wherein each of the plurality of variable refractive index regions is curved.
